# EUROPEAN PATENT APPLICATION

(11) **EP 1 793 310 A1**
(43) Date of publication of application: **06.06.2007**
(21) Application number: 06256109.7
(22) Date of filing: 29.11.2006
(51) Int. Cl.: G06F 9/44

(54) **A broadcast receiver and oad download method of the same**

(30) Priority: 05.12.2005 KR 20050117428
(71) Applicant: LG Electronics Inc., Youngdungpo-Gu Seoul (KR)
(72) Inventor: Kim, Yu-Jin, Book-gu Pohang-si (KR)
(74) Representative: Camp, Ronald

(57) **Abstract**

A broadcast method of over the air download comprises providing a receiver for receiving a firmware or software, downloading and updating the firmware on the broadcast receiver, which comprises storing the last used channel, selecting an over the air download channel automatically, operating an over the air download via the over the air download channel, and converting the over the air download channel to the last used channel when the over the air download is completed.

## Description

The present invention relates to a broadcast receiver. It more specifically relates to a digital broadcast method and apparatus for updating software on a broadcast receiver over the air, via the cable network system and satellite.

More particularly, embodiments of the present invention provide a method and apparatus for updating firmware of a broadcast receiver when the receiver is in stand-by mode.

As it will be apparent from the following specification, the term "firmware" is used herein to describe functional operating software that is downloaded to a television receiver or other device and stored in nonvolatile memory. Until the downloaded "firmware" is changed, it resides in hardware (i.e., nonvolatile memory) just like conventional firmware.

In a typical television system, the firmware or necessary software such as graphical user interface are normally pre-installed in the broadcast receiver. The firmware or software pre-installed on the broadcast receiver is used to control a digital broadcast system via the user interface. Thus, firmware has to be updated as the digital broadcast system changes and develops, and the firmware also needs to be updated to enhance the digital broadcast system.

In the prior art, in order to update the firmware for the broadcast receiver, a technician must either visit each television owner to update the firmware or a user must download the latest firmware from the internet to update the firmware. Such updating process would obviously be a troublesome and possibly expensive task for the broadcast receiver user.

Embodiments of the present invention can provide a broadcast receiving method and a broadcast receiver capable of receiving a broadcast signal and a firmware data, which allows the firmware to be automatically downloaded and updated on a broadcast receiver.

Embodiments of the present invention can provide a manual firmware update method operated by a user. The user can the update firmware on a broadcast receiver via on-screen displays, OSD. The operation of the over the air download, OAD is not an easy task for those who do not know how to operate the OAD functions.

In accordance with a first aspect of the invention an OAD method comprises the steps of method comprising determining if a receiver is in stand-by mode, selecting an over the air download channel through which a data being transferred, for downloading software data if a receiver is determined to be in stand-by mode, and operating an over the air download via the over the air download channel. The OAD method may comprise the step of storing the final channel information.

The method may comprise the step of changing the OAD channel to the final channel after or when the OAD process is completed.

The OAD method may comprise a step for perceiving an over the air download signal before the step for determining the stand-by mode. The method may comprise a step for asking the user whether to update the over the air download data on a receiver manually or automatically after the over the air download signal is perceived. The method may further comprise a step for displaying an error message on a display device if the Over the Air download is operated improperly.

Another aspect of the invention provides at least one tuner arranged to change, in accordance with a control signal, at least one memory for storing an over the air download, OAD, data and a controller arranged to control the determination whether a receiver is in stand-by mode, to store the final channel information in the memory, and to download an OAD data in the memory.

Embodiments of the invention can allow the user to easily update the firmware without changing the channel.

In accordance with another aspect of the invention an OAD (Over the Air Download) method may comprise updating firmware by receiving a broadcast signal and extracting the updated software from the received broadcast signal.

Embodiments of the invention can allow the user to easily update the firmware on a broadcast receiver.

Embodiments of the invention will now be described by way of non-limiting example only, with reference to the drawings, in which:

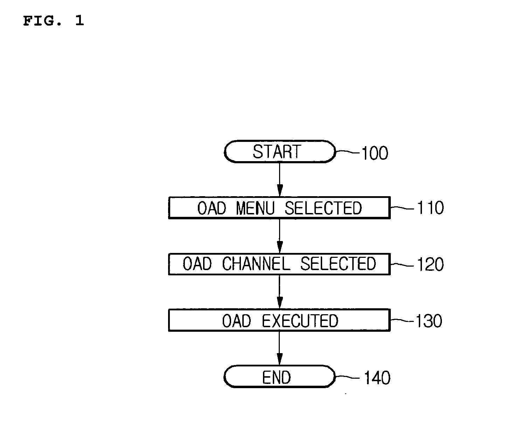

Fig. 1 is a flowchart illustrating the steps of an OAD process.

Fig. 2 is a flowchart illustrating an embodiment of an over the air download (OAD) method in accordance with the invention.

Fig. 3 is a block diagram useful for understanding the operation of an over the air download method and broadcast receiving apparatus in accordance with an embodiment of the present invention.

Fig. 4 is a flow chart illustrating an OAD method for displaying an error message in accordance with Fig. 3.

Fig. 5 is a flow chart illustrating an OAD method including, as a step, a perception and updating process.

Fig. 6 is a block diagram useful for understanding the operation of an over the air download method and broadcast receiving apparatus according to the present invention.

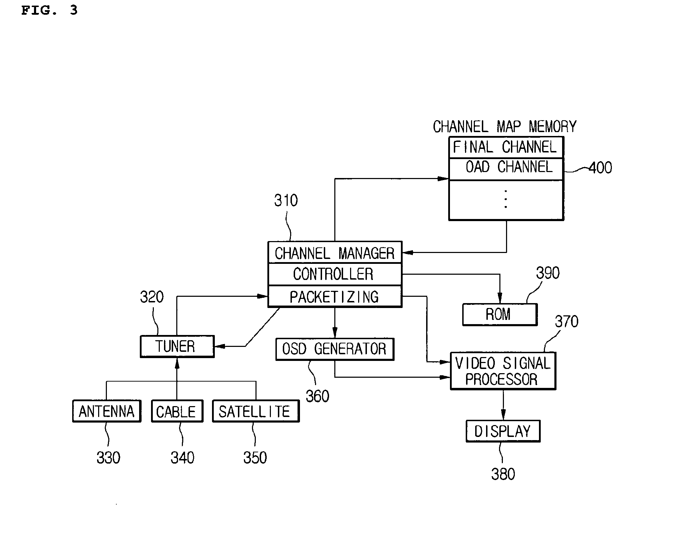

As shown in Fig. 3, a broadcast receiver comprises a CPU **310,** tuner **320,** OSD generator **360,** Firmware Rom **390,** Video processor **370,** Display **380** and Channel map memory **300.**

CPU **310** is a channel manager for storing the final channel at a predetermined location of a channel map memory **300** when the broadcast receiver is in stand-by mode, and the OAD channel is tuned. The final channel represents the last channel that the user watched before turning off the television. Once, the OAD operation is completed, the final channel in the channel map memory **300** is re-tuned.

A stream received from a tuner **320** is packetized and stored in Rom **390.** A stream data received from a tuner **320** is packetized and may be stored in a temporary memory (not shown). If the stream data is successfully downloaded, then the stream data stored in a temporary memory is transferred to Rom **390.**

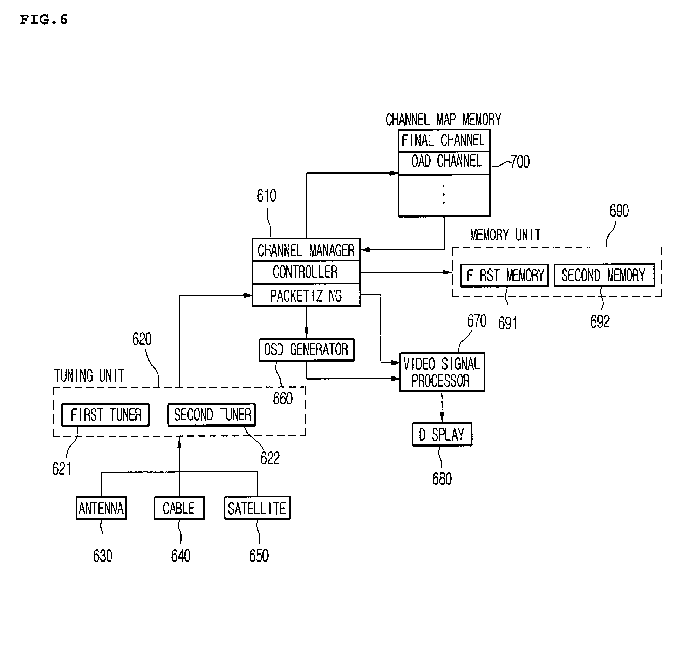

Referring to Fig. 6, a memory unit **690** includes a first memory **691** and a second memory **692.** First memory **691** or second memory **692** can be either a volatile or a nonvolatile memory. Firmware or final channel information may be stored in the first memory **691** or the second memory **692.**

In the present non-limiting embodiment a plurality of old-version firmware is stored in a first memory **692** for a backup purpose should the user want to use the old-version firmware again. A new-version firmware is stored in a second memory **692.** In this embodiment the second memory **692** has substantially the same operation as the Rom **390.** Moreover, several version of firmware may be stored in the first memory **692.**

CPU **310** makes a tuner **320** tune to a predetermined frequency, and the tuner **320** tunes, receives the broadcasted signal via reception means such as an antenna, cable or satellite, and outputs the received signal as a stream format. CPU **310** packetizes the stream, and stores it in Rom **390.**

Tuner **320** tunes the frequency in order to receive the signal from the CPU **310** via a predetermined means such as an antenna, cable, or satellite.

On the other hand, OSD generator **360** sends an OSD signal to a video processor **370** in accordance with a CPU **310.**

The OSD as described above is displayed on a display unit **380.**

Rom **390** stores the OAD data downloaded via an OAD channel and this data is updated when the system is booted.

Channel map memory **300** stores the finally viewed channel, and sends the channel data to the CPU **310** in accordance with the Controller.

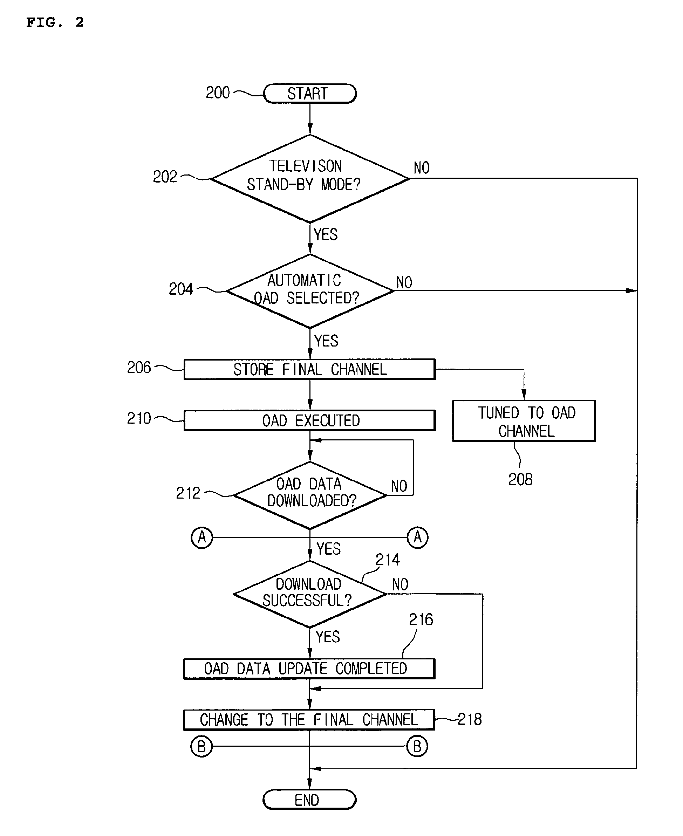

Referring to Fig. 2, the routine begins at step **200.** At step **202,** a determination is made whether the television is in stand-by mode.

The present embodiment provides an automatic OAD operation when the television is in stand-by mode. Even if power to the television is turned off, power is still provided to the digital board in the television, and the circuit board is fully operational. When the television is not in stand-by mode, the step **220** is operated, and the whole process is terminated.

However, embodiments of the invention also provide a conventional method that a user can manually operate OAD via the OSD. Thus, it is noted that both manual and automatic OAD methods can be provided in accordance with the user's preference.

When the television is in stand-by mode, the step **204** commences. At step **204,** a determination is made as to whether the automatic OAD function is selected. If the automatic OAD function is not selected, the routine proceeds to step **220** and the process ends. If the automatic OAD function is selected, the routine proceeds to step **206.**

If a user manually executes the OAD, and step **202** and step **204** are ignored. When the TV power is turned on, and a user manually executes the automatic OAD, the routine begins at step **206.**

At step **206,** the final channel is a channel, which the user last watched, and which is stored in a channel map memory **300.** Referring to Fig. **3,** a channel manager **310** stores "the most recently viewed channel" data in a channel map memory **300.** Once the OAD process is completed, the OAD channel is converted to the final channel. Since the broadcast receiving apparatus updates the firmware and converts the OAD channel to the final channel, it is very convenient for the user.

The routine proceeds to step **208.** At step **208,** a channel is automatically tuned in accordance with a channel map memory **300** in Fig. **3.** The television power is still in stand-by mode.

The routine proceeds to step **210.** At step **210,** the OAD is executed. In a prior art, an OAD is processed is embodied as below. First, software or firmware used in a digital broadcast receiver is formatted and encoded protocol for OC. The OAD software is multiplexed and sent with a broadcast stream and data stream for indexing programs. The stream being sent from the broadcasting station is sent to a broadcast receiver, and the receiver extracts the software from the broadcast signal, and updates the software in the receiver.

By this embodiment, even if the user is skilled to operate the OAD, the user is not able to watch the television program when the user is operating the OAD.

In its preferred embodiment, in order to update the firmware for the broadcast receiver, a new OAD signal is first perceived, an OAD channel is selected while a receiver is in stand-by mode, the OAD data is extracted from the signal, OAD is stored in a memory and the OAD data is updated on a receiver.

Referring to Fig. **3,** an OAD software is inputted to a tuner **320** via antenna, cable network, and satellite. Tuner **320** processes a signal, and sends the signal to CPU **310.** Controller **310** stores the digital signal processed OAD software in Rom **390.**

Step **212** is required to delay a OAD process until the operation is completed, and once the OAD process is completed, the routine proceeds to step **214.**

At step **214,** it is determined whether a data is properly downloaded, and then the routine proceeds to step **216,** and the OAD process is completed.

If a user chooses an automatic OAD update, the system is reset during the stand-by mode, and the downloaded software is installed in the system.

If a data is not installed properly, the routine proceeds to step **218** and terminates at step **220**.

Furthermore, while the embodiments have been described with regard to a digital TV for updating the downloaded software over the air, the present invention is similar applicable to a receiver having a plurality of external ports.

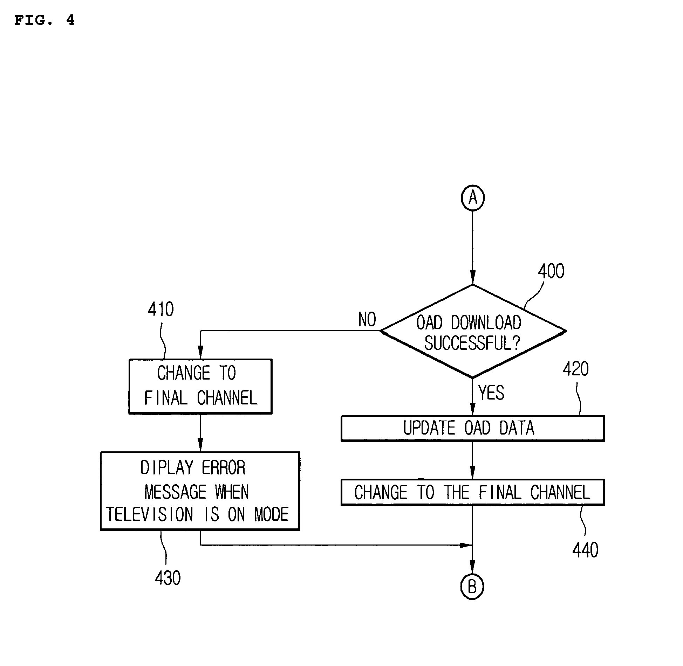

Fig. 4 is a flow chart illustrating an OAD method for displaying an error message when the OAD updating is operated improperly. Fig. 4 shows other embodiment of Fig 3.

As shown in Fig. 4, Steps **A through B** show an alternative embodiment for displaying an error message if the OAD download is operated improperly. At step **400,** it is determined whether a data is properly downloaded, and then the routine proceeds to step **420** to update OAD data if the data is properly downloaded. The routine proceeds to Step **440,** and the OAD channel is changed to the final channel. On the other hand, if the data is not properly downloaded, the routine proceeds to step **410.** At step **410,** the OAD channel is changed to final channel and an error message is displayed when the user turns on the television as shown in Step **430.**

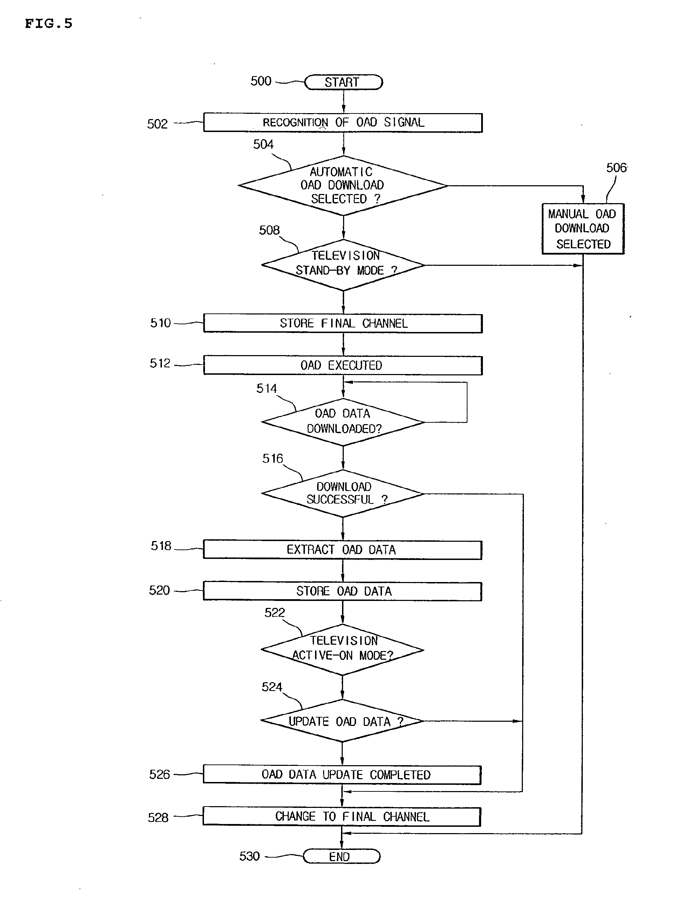

The embodiment of Fig. 5 shows a method which includes a step of recognizing an OAD signal.

The routine begins at step **500,** and an OAD signal is recognized by a broadcast receiver at step **502.**

At step **504,** a determination is made as to whether the automatic OAD download is selected. If the automatic OAD download is selected, the routine proceeds to step **508** and if the automatic OAD download is not selected, and then the routine proceeds to step **506.** The manual OAD download is selected at Step **506,** and then the routine is terminated.

The manual download represents the selection of an OAD download via OSD by the user.

At step **508,** a determination is made as to whether the receiver is in stand-by mode. If the receiver is not in stand-by mode, then the routine is terminated. On the other hand, if the receiver is in stand-by mode, the routine proceeds to step **510.**
At step **510,** final channel information is stored in Memory Unit **690.**

The routine proceeds to step **512.** At step **512,** the OAD is executed. Step **514** ensures that the OAD download is fully completed, and once the OAD download is completed, the routine proceeds to step **516.**

At step **516,** a determination is made as to whether the OAD download is successful. If the OAD download is not successful, the routine proceeds to step **528.** If the OAD download is successful, the routine proceeds to step **518.**

At step **518,** OAD data is extracted from the OAD signal. At step **520,** OAD data is stored in either a first memory **691** or a second memory **692.** The OAD data is not limited to data representing only operating software and firmware, but can also include other necessary software.

The routine proceeds to Step **522.** At step **522,** a determination is made as to whether the television is in active-on mode. If the television is in active-on mode, another determination is made as to whether to update the OAD data at step **524.**

At step **524,** once the OAD process is completed, a user can make a decision whether the downloaded software should be installed. In this case, a user can update the software as the television power was turned on or a user can additionally update the software via the OSD menu. As described-above, a user decides whether the downloaded software should be updated, and commands updating process if the user decides to do so.

At step **526,** OAD data update is completed, and the OAD channel is changed to the final channel at step **528.** If the user decides not to update the OAD data on a receiver at step **524,** the routine proceeds to step **528.** At step **528,** the OAD channel is changed to the final channel, and then the routine is terminated.

It can be seen that embodiments allow the user to easily update the firmware without changing the television channel back and forth.

Although embodiments of the present invention have been described by way of example, it will be appreciated that many modifications and adaptations may be made thereto without departing from the scope of the invention as set forth in the claims. For example, while reference has been made to the memory unit having two memories, a greater number may be employed according to requirements. Likewise while reference has been made to firmware and channel information being stored in one or the other of the memories, such information may be stored in both.

## Claims

1. An over the air download method comprising:
determining if a receiver is in stand-by mode;
selecting an over the air download channel through which data is to be transferred, for downloading software data if a receiver is determined to be in stand-by mode; and
operating an over the air download via the over the air download channel.

2. The over the air download method according to claim 1, further comprising:
storing final channel information identifying the last channel selected.

3. The over the air download method according to claim 2, further comprising:
changing the over the air download channel to the final channel after or when the over the air download is completed.

4. The over the air download method according to claim 1, further comprising the step of recognizing an over the air download signal before the step for determining the stand-by mode.

5. The over the air download method according to claim 1, further comprising the step of asking a user whether to update the over the air download data on a receiver manually or automatically, after the air download signal has been recognized.

6. The over the air download method according to claim 1, further comprising:
displaying an error message on a display device if the over the Air download is defective.

7. A broadcast receiver comprising:
at least one tuner arranged to change a channel in accordance with a control signal;
at least one memory arranged to store an over the air download data; and
a controller arranged to control the determination of whether a receiver is in stand-by mode, to store final channel information in the memory, and to download over the air download data in the memory.

8. The broadcast receiver according to claim 7, wherein the memory includes a first memory arranged to store the downloaded data and a second memory arranged to install the downloaded data.

9. The broadcast receiver according to claim 7, wherein the controller is arranged to change the over the air download channel to the final channel after or when the receiver is in stand-by mode.

10. The broadcast receiver according to claim 7, further comprising:
an on screen display generator arranged to display information via an on screen display.

11. The broadcast receiver according to claim 7, wherein the controller is arranged to send a signal indicating that the over the air download is defective to the on screen display generator.

12. The broadcast receiver according to claim 9, wherein the broadcast receiver comprises a first tuner arranged to select a channel on which to receive a broadcast signal and a second tuner arranged to receive OAD data.

13. A software updating method comprising:
recognizing an over the air download signal;
determining if a broadcast receiver is stand-by mode;
selecting an over the air download channel while a receiver is in stand-by mode;
receiving a signal including an over the air download data;
extracting the over the air download data from the signal;
storing the over the air download data in a memory; and
updating the over the air download data on a receiver.

14. The software updating method according to claim 13,
wherein the over the air download is selectively updated on a receiver by a user.

15. The software updating method according to claim 12,
wherein the over the air download data includes firmware data.

16. The software updating method according to claim 15,
wherein the firmware is updated on a receiver via a wired network or a wireless network.

17. The software updating method according to claim 13,
wherein the signal is a data stream.

18. The software updating method according to claim 13,
wherein the data stream is packetized.

19. An over the air download method comprising:
selecting an over the air download channel and storing final channel information;
operating an over the air download process via the over the air download channel; and
changing the over the air download channel to the final channel when the receiver turns active-on mode.

20. The over the air download method according to claim 19, further comprising:
displaying an message when the receiver turns active-on mode.

21. The over the air download method according to claim 19,
wherein the message is an error message or updating message.

22. An over the air download method comprising:
recognizing an over the air download signal; and
operating an over the air download via the over the air download channel.

23. The over the air download method according to claim 22, further comprising:
determining whether to receive the over the air download data after the recognition step.

24. The over the air download method according to claim 22, further comprising:
determining whether to install the over the air download data on the receiver after the operation step.

25. The over the air download method according to claim 22, further comprising:
displaying a download progress indicator on a display.
